# EUROPÄISCHE PATENTANMELDUNG

(11) **EP 2 085 575 A1**
(43) Veröffentlichungstag der Anmeldung: **05.08.2009**
(21) Anmeldenummer: 08001942.5
(22) Anmeldetag: 01.02.2008
(51) Int. Cl.: F01D 9/02, F16J 15/32, F01D 11/00

(54) **Kombination von Bürstendichtung mit Kolbenring für grosse Dichtspalte**

(71) Anmelder: SIEMENS AKTIENGESELLSCHAFT, 80333 München (DE)
(72) Erfinder: Pross, Jörg, 79774 Albbruck (DE); Tschirren, Stefan, 4242 Laufen (CH)

(57) **Zusammenfassung**

Es wird eine Bauteilanordnung offenbart, welche zwei Bauteilelemente (8,11) mit unter Belassung eines Spalts (1) ineinander geschobenen, zueinander statisch angeordneten Abschnitten und eine den Spalt (1) abdichtende Bürstendichtung (4) mit einer Bürste (5) und einem Dichtungshalter (6) umfasst. Eines der beiden Bauteilelemente (8,11) weist eine in Bereich des abzudichtenden Spaltes (1) umlaufende, zum anderen Bauteilelement (8,11) hin offene Nut (7) auf, der Dichtungshalter (6) besitzt eine der Nut (7) entsprechende Geometrie und weist derartige Abmessungen auf, dass er in Richtung auf das andere Bauteilelement (8,11) hin in der Nut (7) verschiebbar ist. Zudem wird eine Brennkammeranordnung (21) und eine Gasturbine mit einer solche Brennkammeranordnung und eine Gasturbine mit einer solche Brennkammeranordnung offenbart, wobei die Brennkammeranordnung ein Flammrohr (8) mit einem Flammrohrausgang (9) und ein in Strömungsrichtung eines vom Flammrohr (8) ausgehenden Heißgases dem Flammrohrausgang (9) nachgeordnetes Übergangselement (11) umfasst, wobei der Flammrohrausgang (9) und der Eingang des Übergangselements (11) teilweise ineinander geschoben sind, und ein Spalt (1) dazwischen bilden dass, durch eine Bürstendichtung (4), die eine Bürste (5) und einen Dichtungshalter (6) umfasst, abgedichtet wird.

## Beschreibung

Die vorliegende Erfindung betrifft eine Brennkammer und eine Vorrichtung zum Abdichten eines Spaltes zwischen zwei Bauelementen mit Hilfe einer Bürstendichtung.

Bürstendichtungen wurden entwickelt und zuerst angewendet als Dichtung zwischen einem Rotor und einem Stator in rotierenden Maschinen. Gegenüber den vielfach verwendeten Labyrinthdichtungen sind sie wesentlich dichter und weniger empfindlich, falls der Rotor anstreift. Eine Bürstendichtung besteht im Wesentlichen aus einem Kranz dicht gepackter Metallborsten, die in einer Fassung gehalten werden.

Zunehmend werden Bürstendichtungen auch statisch, also zur Abdichtung von Zwischenräumen zwischen ruhenden Bauteilen, verwendet. Die statische Bürstendichtung ist aufgrund ihrer großen lokalen Flexibilität besonders gut geeignet in Situationen, wo die Dichtfläche keine eindeutige geometrische Form aufweist, wie dies beispielsweise bei einer Gussoberfläche oder ähnlichem gegeben ist. Auch die Variabilität des Dichtspaltes, sei es temporär oder lokal, wird durch eine Bürstendichtung gut berücksichtigt.

Allerdings weisen Bürstendichtungen den Nachteil auf, dass der maximal abdichtbare Dichtspalt mit wenigen Millimetern relativ klein ist. Angesichts dieses Nachteiles werden reine Bürstendichtungen beispielsweise zur Abdichtung von Übergängen zwischen Brennkammerbauteilen, insbesondere im Rahmen von Gasturbinenbrennkammern, bisher nicht angewendet. Hier werden bisher andere Dichtungskonzepte verwendet, zum Beispiel Kolbenringe oder Blechdichtungen (spring clip). Eine Bürstendichtung würde allerdings eine geringere Leckage aufweisen.

Es ist daher eine Aufgabe der vorliegenden Erfindung, eine vorteilhafte Bauteilanordnung zur Verfügung zu stellen, welche zwei Bauteilelemente mit unter Belassung eines Spalts ineinander geschobenen, zueinander statisch angeordneten Abschnitten und eine den Spalt abdichtende Bürstendichtung umfasst. Es ist eine weitere Aufgabe der vorliegenden Erfindung, eine vorteilhafte Brennkammeranordnung zur Verfügung zu stellen. Es ist zudem eine Aufgabe der vorliegenden Erfindung, eine vorteilhafte Gasturbine zur Verfügung zu stellen.

Die erste Aufgabe wird durch eine Bauteilanordnung nach Anspruch 1 gelöst. Die zweite Aufgabe wird durch eine Brennkammeranordnung nach Anspruch 11 gelöst. Die dritte Aufgabe wird durch eine Gasturbine nach Anspruch 17 gelöst. Die abhängigen Ansprüche enthalten weitere, vorteilhafte Ausgestaltungen der Erfindung.

Die erfindungsgemäße Bauteilanordnung umfasst zwei Bauteilelemente mit unter Belassung eines Spalts ineinander geschobenen, zueinander statisch angeordneten Abschnitten und eine den Spalt abdichtende Bürstendichtung. Die Bürstendichtung umfasst eine Bürste und einem Dichtungshalter. In der Bauteilanordnung weist eines der beiden Bauteilelemente eine im Bereich des abzudichtenden Spaltes umlaufende, zum anderen Bauteilelement hin offene Nut auf. Der Dichtungshalter besitzt eine der Nut entsprechende Geometrie und weist derartige Abmessungen auf, dass er in Richtung auf das andere Bauteilelement hin in der Nut verschiebbar ist.

Im Rahmen der Erfindung soll "statisch zueinander angeordnet" bedeuten, dass die Bauteilabschnitte nicht relativ zueinander rotieren. Trotz möglichen Bewegungen der erfindungsgemäßen Bauteilabschnitte in Folge von Vibrationen oder thermischen Ausdehnungen werden Bauteile, die sich auf diese Weise relativ zueinander bewegen, im Rahmen der Erfindung als statisch zueinander angeordnet angesehen.

Der Dichtungshalter kann zum Beispiel ringförmig ausgestaltet sein. Er kann aber grundsätzlich die Form eines beliebigen, geschlossenen Rahmens haben, insbesondere die Form eines Rahmens mit einem rechteckigen Querschnitt.

Durch die radiale Verschiebbarkeit des Dichtungshalters und damit der Bürstendichtung wird eine verbesserte Anpassung der Dichtung an mögliche Bewegungen der Bauteilelemente gegeneinander, wie sie beispielsweise durch thermische Ausdehnungen, Vibrationen oder mechanische Spannungen hervorgerufen werden können, erreicht.

Vorteilhafterweise kann das äußere Bauteilelement der beiden ineinander geschobenen Bauteilelemente die Nut aufweisen. Selbstverständlich kann aber auch das innere Bauteilelement der beiden ineinander geschobenen Bauteilelemente die Nut aufweisen.

Zudem kann der Dichtungshalter vorteilhafterweise einen Teil des abzudichtenden Spaltes überbrücken. Insbesondere kann der Dichtungshalter mehr als die Hälfte der Breite des abzudichtenden Spaltes überbrücken. Auf diese Weise überbrückt der Dichtungshalter den Großteil des Spaltes, während die Bürste sich an die Kontur der Dichtfläche anpasst. So können auch relativ große Spalte mit Hilfe einer Bürstendichtung abgedichtet werden.

Einer der ineinander geschobenen Abschnitte der Bauteilelemente kann beispielsweise den Ausgang eines Flammrohres einer Brennkammeranordnung bilden. In diesem Fall ist es vorteilhaft, wenn der Ausgang des Flammrohrs in Bezug auf das andere Bauteilelement innen angeordnet ist. Auf diese Weise kann der Spalt nicht in Strömungsrichtung des aus dem Flammrohr austretenden Heißgases durchströmt werden, sondern nur entgegen der Strömung, was die Leckage zu vermindern hilft und im Vergleich zu einem Spalt, der in Strömungsrichtung durchströmt werden kann, den Einsatz kleinerer Dichtungen zulässt. Zudem wird im Rahmen der vorgeschlagenen Anordnung die Rückseite des inneren Bauteilelements, also beispielsweise des Flammrohrs, nicht vom Heißgas benetzt, wodurch die Wärmebelastung verringert wird. Darüber hinaus wird die zum Spülen des Spaltes benötigte Luftmenge minimiert.

Weiterhin kann einer der ineinander geschobenen Abschnitte der Bauteilelemente einen Abschnitt eines Übergangselements (transition piece) bilden, welches zwischen einem Flammrohr (combustor basket) und einem Brennkammerausgang der Brennkammeranordnung angeordnet ist. In diesem Fall ist es vorteilhaft, wenn der Abschnitt des Übergangselements in Bezug auf das andere Bauteilelement außen angeordnet ist. Auch hier ist dann nur eine Durchströmung des Spaltes entgegen der allgemeinen Strömungsrichtung möglich.

Vorteilhafterweise können die ineinander geschobenen Anschnitte der Bauteilelemente zylinderförmig ausgestaltet sein. Die Nut kann in diesem Fall als Ringnut ausgestaltet sein. Weiterhin kann der Dichtungshalter beispielsweise als Kolbenring ausgestaltet sein.

Die erfindungsgemäße Brennkammeranordnung umfasst ein Flammrohr mit einem Flammrohrausgang als ein erstes Bauelement und ein in Strömungsrichtung eines vom Flammrohr ausgehenden Heißgases dem Flammrohrausgang nachgeordnetes Übergangselement als ein zweites Bauelement mit einem an den Flammrohrausgang angepassten Eingang. Der Flammrohrausgang und der Eingang des Übergangselements sind teilweise ineinander geschoben, wobei sich ein Spalt zwischen dem Flammrohrausgang und dem Eingang des Übergangselements ausbildet. Der Spalt ist durch eine Bürstendichtung, die eine Bürste und einen Dichtungshalter umfasst, abgedichtet. Auf diese Weise wird im Vergleich zu einer herkömmlich verwendeten Klemmfederdichtung (spring clip) eine geringere Leckage erreicht. Zudem benötigt eine Bürstendichtung axial weniger Platz als eine Klemmfederdichtung, sodass die Länge des, beispielsweise luftgekühlten, Kragens am Flammrohrausgang reduziert werden kann. Dies reduziert zusätzlich den Bedarf an Kühlluft.

Vorteilhafterweise kann der Flammrohrausgang oder das Übergangselement eine im Bereich des abzudichtenden Spaltes umlaufende, zum jeweils anderen Bauelement hin offene Nut aufweisen. Der Dichtungshalter kann dabei eine der Nut entsprechende Geometrie besitzen derartige Abmessungen aufweisen, dass er in Richtung auf das jeweils andere Bauelement hin in der Nut verschiebbar ist. Weiterhin können die ineinander geschobenen Anschnitte des Flammrohrausganges und des Übergangselementes zylinderförmig ausgestaltet sein und die Nut als Ringnut ausgestaltet sein. Der Dichtungshalter kann vorzugsweise als Kolbenring ausgestaltet sein. Weiterhin kann der Dichtungshalter einen Teil des abzudichtenden Spaltes überbrücken, vorzugsweise mehr als die Hälfte der Breite des abzudichtenden Spaltes.

Der Dichtungshalter kann grundsätzlich ringförmig ausgestaltet sein. Er kann aber auch die Form eines beliebigen, geschlossenen Rahmens haben, insbesondere die Form eines Rahmens mit einem rechteckigen Querschnitt.

Durch die Verwendung einer Bürstendichtung zur Abdichtung des Ringspaltes zwischen dem Flammrohr (combustor basket) und dem Übergangselement (transition inlet ring) wird der Massenstrom an Kühlungs- und Leckageluft reduziert. Der gesparte Luftmassenstrom strömt auf diese Weise durch das Flammrohr, wodurch die Flammentemperatur und damit die NOₓ-Emissionen sinken.

Die erfindungsgemäße Gasturbine umfasst zumindest eine erfindungsgemäße Brennkammeranordnung, wie sie in den vorherigen Absätzen beschrieben wurde. Die erfindungsgemäße Gasturbine hat dieselben Vorteile wie die erfindungsgemäße Brennkammeranordnung. Insbesondere stellt die durch die Bürstendichtung erzielte Senkung der NOₓ-Emissionen einen wesentlichen Wettbewerbsvorteil für die erfindungsgemäße Gasturbine dar.

Weitere Merkmale, Eigenschaften und Vorteile der vorliegenden Erfindung werden im Folgenden anhand eines Ausführungsbeispieles mit Bezug auf die beigefügten Figuren näher beschrieben. Die Ausführungsvarianten sind sowohl einzeln als auch in Kombination miteinander vorteilhaft.
- Fig. 1: zeigt schematisch einen Teil einer herkömmlichen Brennkammeranordnung einer Gasturbine.
- Fig. 2: zeigt schematisch einen Schnitt durch einen Teil der in der Figur 1 gezeigten Brennkammeranordnung.
- Fig. 3: zeigt schematisch einen Schnitt durch eine erfindungsgemäße Bauteilanordnung.
- Fig. 4: zeigt schematisch einen Teil einer erfindungsgemäßen Brennkammeranordnung mit einer Bürstendichtung.
- Fig. 5: zeigt schematisch einen Teil einer herkömmlichen Brennkammeranordnung mit einer Klemmfederdichtung.
- Fig. 6: zeigt schematisch eine Gasturbine.
- Fig. 7: zeigt schematisch einen Schnitt durch eine weitere Variante einer erfindungsgemäßen Bauteilanordnung.

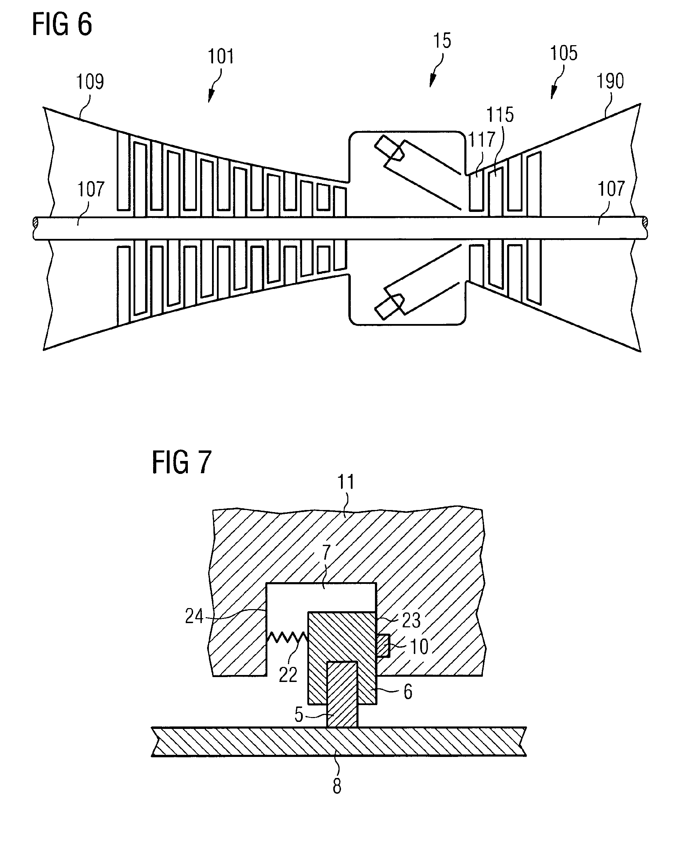

Im Folgenden wird zunächst anhand der Figuren 6, 1 und 2 eine konventionelle Möglichkeit zur Abdichtung eines Ringspaltes zwischen zwei Bauelementen einer Brennkammeranordnung in einer Gasturbine näher beschrieben.

Die Figur 6 zeigt schematisch eine Gasturbine. Eine Gasturbine weist im Inneren einen um eine Rotationsachse drehgelagerten Rotor mit einer Welle 107 auf, der auch als Turbinenläufer bezeichnet wird. Entlang des Rotors folgen aufeinander ein Ansauggehäuse 109, ein Verdichter 101, eine Brennkammeranordnung 15, eine Turbine 105 und das Abgasgehäuse 190.

Die Brennkammeranordnung 15 kommuniziert mit einem beispielsweise ringförmigen Heißgaskanal. Dort bilden mehrere hintereinander geschaltete Turbinenstufen die Turbine 105. Jede Turbinenstufe ist aus Schaufelringen gebildet. In Strömungsrichtung eines Arbeitsmediums gesehen folgt im Heißgaskanal einer Leitschaufelreihe 117 eine aus Laufschaufeln 115 gebildete Reihe. Die Leitschaufeln 117 sind dabei an einem Innengehäuse eines Stators befestigt, wohingegen die Laufschaufeln 115 einer Reihe beispielsweise mittels einer Turbinenscheibe am Rotor angebracht sind. An dem Rotor angekoppelt ist ein Generator oder eine Arbeitsmaschine.

Während des Betriebes der Gasturbine wird vom Verdichter 101 durch das Ansauggehäuse 109 Luft angesaugt und verdichtet. Die am turbinenseitigen Ende des Verdichters 101 bereitgestellte verdichtete Luft wird zu den Brennkammeranordnungen 15 geführt und dort mit einem Brennstoff vermischt. Das Gemisch wird dann unter Bildung des Arbeitsmediums in der Brennkammer verbrannt. Von dort aus strömt das Arbeitsmedium entlang des Heißgaskanals an den Leitschaufeln 117 und den Laufschaufeln 115 vorbei. An den Laufschaufeln 115 entspannt sich das Arbeitsmedium impulsübertragend, so dass die Laufschaufeln 115 den Rotor antreiben und dieser die an ihn angekoppelte Arbeitsmaschine.

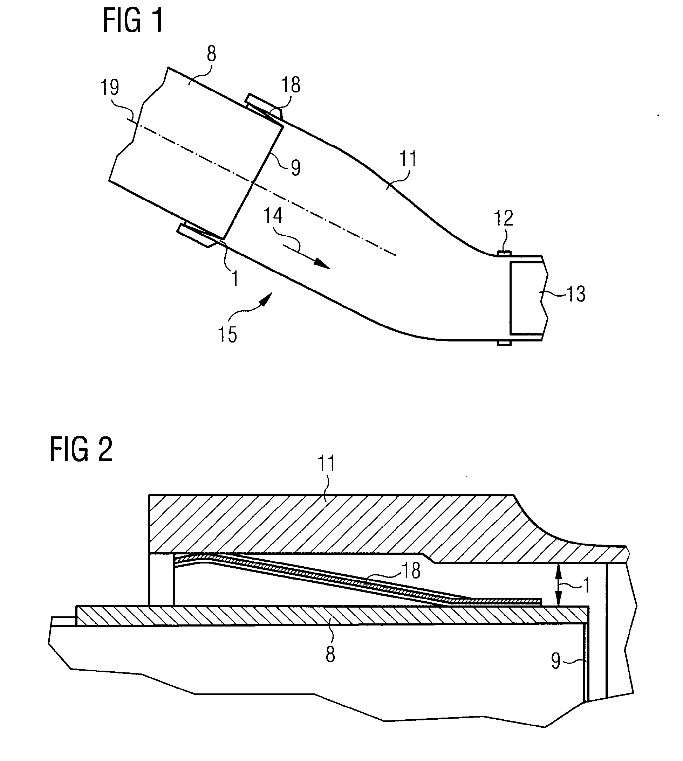

Die Figur 1 zeigt schematisch einen Teil einer Brennkammeranordnung 15 einer Gasturbine. Bei der in der Figur 1 gezeigten Brennkammeranordnung 15 kann es sich beispielsweise jeweils um eine sogenannte Can-Brennkammer handeln, von denen mehrere konzentrisch um den Rotor, entlang des Umfangs gleichmäßig verteilt sind. Jede Brennkammeranordnung 15 umfasst ein so genanntes Flammrohr 8 (combustor basket) und ein Übergangselement 11 (transition piece). In dem Flammrohr 8 wird ein Gemisch aus Brennstoff und Luft verbrannt. Das dabei entstehende Heißgas wird von dem Flammrohr 8 über das Übergangselement 11 zu einer Turbine 105 geleitet, wo es als Arbeitsmedium die in der Turbine 105 befindlichen Turbinenschaufeln 13 antreibt. Die Strömungsrichtung des Heißgases in der Brennkammeranordnung 15 ist durch einen Pfeil 14 gekennzeichnet.

Die Mittelachse des Flammrohrs 8 und der ineinander geschobenen Abschnitte des Flammrohrs 8 und des Übergangselementes 11 ist durch die Bezugsziffer 19 gekennzeichnet.

Das in der Figur 1 gezeigte Flammrohr 8 umfasst weiterhin einen Ausgang 9, an welchen das Übergangselement 11 in der Weise angeschlossen ist, dass ein Abschnitt des Ausganges 9 des Flammrohrs 8 in einen Abschnitt des daran anschließenden Übergangselementes 11 geschoben ist. Die ineinander geschobenen Abschnitte sind dabei zylinderförmig ausgestaltet. Zwischen den ineinander geschobenen Abschnitten des Flammrohrs 8 und des Übergangselementes 11 bildet sich ein Spalt 1 aus. Dieser Spalt 1 wird bisher beispielsweise durch eine Klemmfederdichtung 18 abgedichtet.

Das Übergangselement 11 weist eine in Strömungsrichtung abnehmenden Querschnittsfläche auf, die sich zudem von einer Kreisfläche in eine Ringsegmentfläche wandelt. Das Ende des Übergangselementes 11 in Strömungsrichtung 14 bildet den Ausgang 12 der Brennkammeranordnung 15, der dem ringförmigen Turbineneingang gegenüber liegt.

Die Figur 2 zeigt schematisch einen Schnitt durch die Verbindung zwischen dem Flammrohr 8 und dem Übergangselement 11. Der den Ausgang 9 des Flammrohrs 8 aufweisende Abschnitt des Flammrohrs 8 ist in einen Abschnitt des Übergangselementes 11 eingeschoben. Zwischen den ineinander geschobenen Abschnitten des Flammrohrs 8 und des Übergangselementes 11 entsteht dabei ein Spalt 1. Dieser Spalt 1 wird in der Figur 2 mit Hilfe einer Klemmfederdichtung 18 abgedichtet.

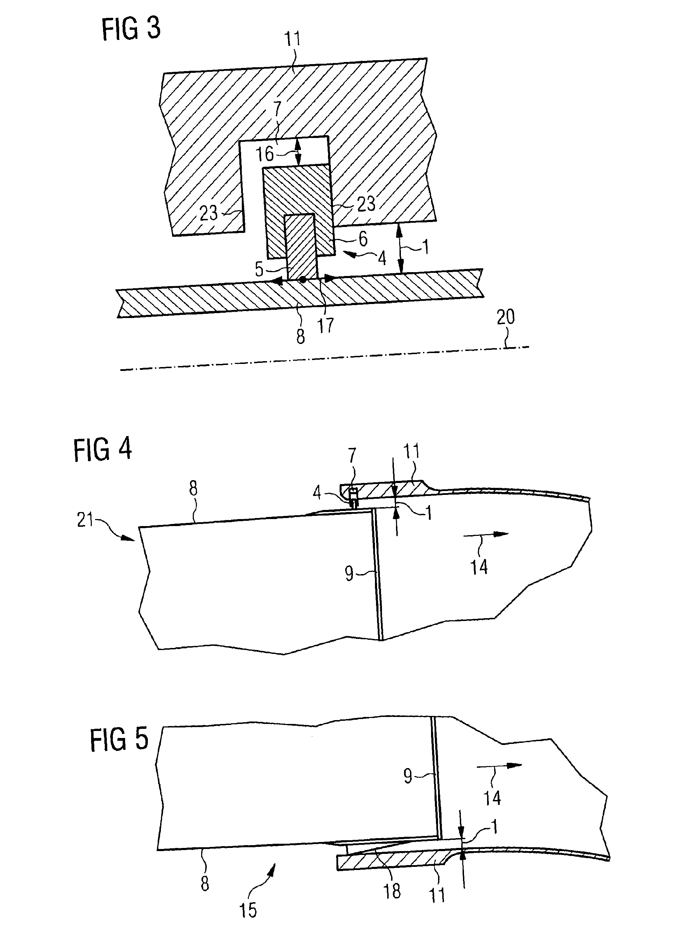

Im Folgenden wird die erfindungsgemäße Abdichtung des Spaltes zwischen zwei Bauteilelementen anhand der Figuren 3, 4 und 7 näher erläutert. Die Figuren 3, 4 und 7 zeigen schematisch einen Schnitt durch eine erfindungsgemäße Bauteilanordnung, bei der es sich im vorliegenden Ausführungsbeispiel um eine erfindungsgemäße Brennkammeranordnung 21 in einer Gasturbine handelt. Es sind zwei Bauteilelemente dargestellt, die ineinander geschoben sind. Dabei handelt es sich im vorliegenden Ausführungsbeispiel um einen Abschnitt des Flammrohrs 8 und einen Abschnitt des Übergangselementes 11. Zwischen den ineinander geschobenen zylinderförmigen Abschnitten des Flammrohrs 8 und des Übergangselementes 11 befindet sich ein Spalt 1. Dieser Spalt 1 wird mit Hilfe einer Bürstendichtung 4 abgedichtet.

Die Bürstendichtung 4 umfasst einen Dichtungshalter 6 und eine Bürste 5. Die Bürste 5 ist dabei so in dem Dichtungshalter 6 angeordnet, dass sich die Borsten der Bürste 5 teilweise im Inneren des Dichtungshalters 6 befinden und teilweise aus dem Dichtungshalter 6 herausragen. Vorzugsweise ist der Dichtungshalter 6 als Kolbenring ausgestaltet. Dies gewährleistet einen ständigen direkten Kontakt der Bürste 5 mit dem Flammrohr 8.

Der Abschnitt des Übergangselementes 11 in der Figur 3 weist eine im Bereich des abzudichtenden Spaltes 1 verlaufende Ringnut 7 mit einer Radialrichtung, bezogen auf die Mittelachse 20, auf. Der Dichtungshalter 6 ist in diese Ringnut 7 dergestalt eingesetzt, dass der Dichtungshalter 6 radial in Bezug auf eine Mittelachse 20 verschiebbar ist. Die Richtung der radialen Verschiebbarkeit ist durch einen Pfeil mit der Bezugsziffer 16 gekennzeichnet. Die Ringnut 7 und der Bürstenhalter 6 sind weiterhin so angeordnet, dass der Dichtungshalter 6 teilweise in den Spalt 1 hineinragt und auf diese Weise den Spalt 1 teilweise abdichtet. Der Teil des Spaltes 1, der nicht durch den Dichtungshalter 6 abgedichtet wird, wird durch die in Richtung des Flammrohrs 8 aus dem Dichtungshalter 6 herausragende Bürste 5 abgedichtet. Die Borsten der Bürste 5 stehen dabei in direktem Kontakt mit der Oberfläche des Flammrohrs 8. Die Richtung einer axialen Verschiebbarkeit der beiden ineinander geschobenen Abschnitte des Flammrohrs 8 und des Übergangselementes 11 gegeneinander an der Kontaktfläche zwischen der Oberfläche des Flammrohrs 8 und der Bürste 5 durch einen Pfeil mit der Bezugsziffer 17 gekennzeichnet. Die radiale Verschiebbarkeit des Dichtungshalters 6 in der Ringnut 7 ermöglicht einen Ausgleich von möglichen Bewegungen oder Verschiebungen des Übergangselementes 11 und des Flammrohrs 8 in Radialrichtung gegeneinander, beispielsweise durch thermische Ausdehnung oder mechanische Spannungen.

Während des Betriebes muss der Dichtungshalter 6 an einer Seitenwand 23 der Ringnut 7 anliegen, da ansonsten eine Leckage entstehen kann. Die aneinander liegenden Flächen müssen entsprechend sauber und plan bearbeitet sein. Typischerweise wird der Dichtungshalter 6 an eine Seitenwand 23 der Ringnut 7 infolge der Druckdifferenz über der Dichtung angepresst. Grundsätzlich sollte der Dichtungshalter 6 in der Ringnut 7 nur wenig Bewegungsspielraum in axialer Richtung haben.

Alternative Ausführungsvarianten, die ein Anliegen des Dichtungshalters 6 an einer Seitenwand 23 der Ringnut 7 gewährleisten, sind in der Figur 7 schematisch dargestellt. Im Unterschied zu Figur 3 ist in der Seitenwand 23 der Ringnut 7, an der der Dichtungshalter 6 anliegt, eine zusätzliche Dichtung 10 angeordnet. Diese Dichtung 10 soll eine mögliche Leckage zwischen dem Dichtungshalter 6 und der anliegenden Seitenwand 23 vermeiden. Weiterhin ist in der Figur 7 zwischen der am Dichtungshalter 6 anliegenden Seitenwand 23 und der dieser gegenüberliegenden Seitenwand 24 ein Federelement in Form einer Feder 22 angeordnet. Die Feder 22 soll im Falle einer zu geringen Druckdifferenz über der Dichtung den Dichtungshalter 6 an die Seitenwand 23 anpressen und so eine mögliche Leckage vermeiden. Grundsätzlich kann die erfindungsgemäße Bauteilanordnung mit der zusätzlichen Dichtung 10 und/oder mit der Feder 22 ausgestattet sein.

Eine weitere Ausführungsvariante besteht darin, dass die beschriebene Ringnut 7 nicht in dem Übergangselement 11, sondern in dem mit dem Übergangselement 11 überlappenden Anteil des Flammrohrs 8 angeordnet ist. In diesem Fall ist der Dichtungshalter 6 entsprechend in der Ringnut 7 angeordnet und die Borsten der Bürste 5 stehen in direktem Kontakt zur Oberfläche des Übergangselementes 11. Diese Ausführungsvariante kann selbstverständlich mit den im Zusammenhang mit der Figur 7 beschriebenen Ausführungsvarianten kombiniert werden.

Die Figur 5 zeigt zum Vergleich schematisch einen zu der Darstellung in der Figur 4 analogen Ausschnitt aus der Brennkammeranordnung 15, in welcher der Spalt 1 zwischen den ineinander geschobenen Abschnitten des Flammrohrs 8 und des Übergangselements 11 mit einer herkömmlichen Klemmfederdichtung 18 abgedichtet ist. Der in der Figur 5 schematisch gezeigte Teil der Brennkammeranordnung 15 wurde im Hinblick auf seine Elemente bereits im Zusammenhang mit den Figuren 1 und 2 näher beschrieben, sodass an dieser Stelle auf die dort gemachten Ausführungen verwiesen wird.

Ein Vergleich der Figur 5 mit der Figur 4 zeigt, dass bei der Verwendung einer Bürstendichtung 4 der Ausgang 9 des Flammrohrs 8 und das Übergangselement 11 einander zu einem erheblich geringeren Anteil überlappen müssen als im Falle der Verwendung einer Klemmfederdichtung 18. Dies bedeutet, dass im Falle der Verwendung einer Bürstendichtung 4 die Länge des, beispielsweise luftgekühlten, Kragens am Ausgang 9 des Flammrohrs 8 erheblich reduziert werden kann. Dies reduziert zusätzlich den Bedarf an Kühlluft.

## Patentansprüche

1. Bauteilanordnung,
welche zwei Bauteilelemente (8, 11) mit unter Belassung eines Spalts (1) ineinander geschobenen, zueinander statisch angeordneten Abschnitten und eine den Spalt (1) abdichtende Bürstendichtung (4) mit einer Bürste (5) und einem Dichtungshalter (6) umfasst,
worin eines der beiden Bauteilelemente (8, 11) eine im Bereich des abzudichtenden Spaltes (1) umlaufende, zum anderen Bauteilelement (8, 11) hin offene Nut (7) aufweist, der Dichtungshalter (6) eine der Nut (7) entsprechende Geometrie besitzt und der Dichtungshalter (6) derartige Abmessungen aufweist, dass er in Richtung auf das andere Bauteilelement (8, 11) hin in der Nut (7) verschiebbar ist.

2. Bauteilanordnung nach Anspruch 1,
worin das äußere Bauteilelement (8, 11) der beiden ineinander geschobenen Bauteilelemente (8, 11) die Nut (7) aufweist.

3. Bauteilanordnung nach Anspruch 1 oder 2,
worin der Dichtungshalter (6) einen Teil des Spaltes (1) überbrückt.

4. Bauteilanordnung nach Anspruch 3,
worin der Dichtungshalter (6) mehr als die Hälfte der Breite des Spaltes (1) überbrückt.

5. Bauteilanordnung nach einem der Ansprüche 1 bis 4,
worin einer der ineinander geschobenen Abschnitte der Bauteilelemente (8, 11) den Ausgang (9) eines Flammrohrs (8) bildet.

6. Bauteilanordnung nach Anspruch 5,
worin der Ausgang (9) des Flammrohrs (8) in Bezug auf das andere Bauteilelement (11) innen angeordnet ist.

7. Bauteilanordnung nach einem der Ansprüche 1 bis 6,
worin einer der ineinander geschobenen Abschnitte der Bauteilelemente (8, 11) einen Abschnitt eines Übergangselements (11) bildet, welches zwischen einem Flammrohr (8) und einem Brennkammerausgang (12) angeordnet ist.

8. Bauteilanordnung nach Anspruch 7,
worin der Abschnitt des Übergangselements (11) in Bezug auf das andere Bauteilelement (8) außen angeordnet ist.

9. Bauteilanordnung nach einem der Ansprüche 1 bis 8,
worin die ineinander geschobenen Anschnitte der Bauteilelemente (8, 11) zylinderförmig ausgestaltet sind und die Nut (7) als Ringnut ausgestaltet ist.

10. Bauteilanordnung Anspruch 9,
worin der Dichtungshalter (6) als Kolbenring ausgestaltet ist.

11. Brennkammeranordnung (21),
die ein Flammrohr (8) mit einem Flammrohrausgang (9) als ein erstes Bauelement und ein in Strömungsrichtung eines vom Flammrohr (8) ausgehenden Heißgases dem Flammrohrausgang (9) nachgeordnetes Übergangselement (11) als ein zweites Bauelement mit einem an den Flammrohrausgang (9) angepassten Eingang umfasst,
wobei der Flammrohrausgang (9) und der Eingang des Übergangselements (11) teilweise ineinander geschoben sind,
wobei sich ein Spalt (1) zwischen dem Flammrohrausgang (9) und dem Eingang des Übergangselements (11) ausbildet,
worin der Spalt (1) durch eine Bürstendichtung (4), die eine Bürste (5) und einen Dichtungshalter (6) umfasst, abgedichtet ist.

12. Brennkammeranordnung (21) nach Anspruch 11,
worin der Flammrohrausgang (9) oder das Übergangselement (11) eine im Bereich des abzudichtenden Spaltes (1) umlaufende, zum jeweils anderen Bauelement (9, 11) hin offene Nut (7) aufweist, der Dichtungshalter (6) eine der Nut (7) entsprechende Geometrie besitzt und der Dichtungshalter (6) derartige Abmessungen aufweist, dass er in Richtung auf das jeweils andere Bauelement (9, 11) hin in der Nut (7) verschiebbar ist.

13. Brennkammeranordnung (21) nach Anspruch 11 oder 12,
worin die ineinander geschobenen Anschnitte des Flammrohrausganges (9) und des Übergangselementes (11) zylinderförmig ausgestaltet sind und die Nut (7) als Ringnut ausgestaltet ist.

14. Brennkammeranordnung (21) nach Anspruch 13,
worin der Dichtungshalter (6) als Kolbenring ausgestaltet ist.

15. Brennkammeranordnung (21) nach einem der Ansprüche 11 bis 14,
worin der Dichtungshalter (6) einen Teil des abzudichtenden Spaltes (1) überbrückt.

16. Brennkammeranordnung (21) nach Anspruch 15,
worin der Dichtungshalter (6) mehr als die Hälfte der Breite des abzudichtenden Spaltes (1) überbrückt.

17. Gasturbine, die eine Brennkammeranordnung (21) nach einem der Ansprüche 11 bis 16 umfasst.
